# EUROPÄISCHE PATENTSCHRIFT

(11) **EP 3 089 318 B1**
(45) Veröffentlichungstag und Bekanntmachung des Hinweises auf die Patenterteilung: **14.08.2019**
(21) Anmeldenummer: 16000966.8
(22) Anmeldetag: 27.04.2016
(51) Int. Cl.: H02J 9/00

(54) **VORRICHTUNG ZUR DURCHGÄNGIGEN VERSORGUNG EINES VERBRAUCHERS MIT ELEKTRISCHER ERNERGIE**
DEVICE FOR THOROUGH SUPPLY OF A CONSUMER WITH ELECTRICAL ENERGY
DISPOSITIF D'ALIMENTATION CONTINUE D'UN CONSOMMATEUR EN ENERGIE ELECTRIQUE

(30) Priorität: 28.04.2015 DE 102015005348; 18.05.2015 DE 102015006237
(43) Veröffentlichungstag der Anmeldung: 02.11.2016
(73) Patentinhaber: Peucon GmbH, 10829 Berlin (DE)
(72) Erfinder: Pakendorf, Uwe Martin, 10829 Berlin (DE)
(74) Vertreter: Scholz, Hartmut

(56) Entgegenhaltungen:
- AT-B- 408 392
- DE-A1- 19 812 013
- DE-A1-102008 043 721
- DE-B3- 10 327 498
- DE-T2- 60 207 396

## Beschreibung

Die vorliegende Erfindung betrifft eine Vorrichtung zur dauerhaften Versorgung eines Verbrauchers mit elektrischer Energie.

Aus dem Stand der Technik sind Funk-Schalter bekannt, die die Schalterstellung eines Schalters (an oder aus) erkennen können. Hierbei ist es vorgesehen, dass ein elektrischer Verbraucher über eine Benutzeroberfläche (z.B. WebUI oder App) mit Strom versorgt werden kann, ohne dass ein physisch vorhandener Schalter betätigt werden müsste.

Ein Nachteil hierbei besteht darin, dass zur Ansteuerung des Verbrauchers, beispielsweise einer Lampe, eine zentrale Datenverarbeitungseinheit dringend erforderlich ist. Ein weiterer Nachteil besteht darin, dass teuere Funk-Schalter notwendig sind, die bei einer Nachrüstung die meist neuwertigen Schalter ersetzten müssen. Auch können Sensoren und Kleinverbraucher nicht dauerhaft mit elektrischem Strom versorgt werden, sondern nur wenn der Schalter mechanisch betätigt wird oder der elektrische Schaltkreis des Funk-Schalters über eine Bedienoberfläche aktiviert wird.

Aus der DE 103 27 498 B3 ist eine Schaltungsanordnung zur Auswertung von positiven und negativen Netzhalbwellen zwecks Erkennung des Schaltzustandes eines in einem Glimmlampenpfad eingebundenen Tastschalters bekannt.

Die Druckschrift AT 408 392 B offenbart eine Steuereinrichtung für ein elektronisches Installationsgerät, bei der die Erfassung der Halbwellen im Wechselstrom mittels Dioden erfolgt.

Aus der Druckschrift DE 103 53 135 A1 ist eine Versorgungsschaltung zur permanenten Versorgung eines Verbrauchers über eine schaltbare Leitung mit Wechselstrom beschrieben, was einer permanenten Versorgung durch Kapazität bedeuten dürfte.

Aus der Druckschrift US 3,339,105 ist elektrischer Schaltkreis bekannt, bei dem eine Diode parallel zum Schalter angeordnet ist und zur Erzeugung einer Halbwelle, die wiederum dazu verwendet der Halbwelle zu versorgen.

Aus der Druckschrift DD 148 136 ist es bekannt, dass ein Energieverbraucher wahlweise über einen Einweggleichrichter betrieben werden kann. Der Einweggleichrichter dient quasi als Dimmer zur Lastreduzierung.

Die Druckschrift US 4,255,746 offenbart ebenfalls eine Vorrichtung zur Versorgung eines Verbrauchers, hier ein Notlichtsystem und ein Brandmelder, mit kapazitiver Spannung.

Die Druckschrift DE 198 12 013 A1 offenbart eine Netzwerkankopplungsvorrichtung zur Ankopplung von mindestens einer Applikation an ein Netzwerk mit einer Energieübertragungseinrichtung zum Übertragen von elektrischer Energie an die Applikation.

Die Druckschrift DE 602 07 396 T2 offenbart eine Einrichtung zur Verminderung des Energieverbrauchs im Zustand der Betriebsbereitschaft von Gebäudebeleuchtungen im Standby-Betrieb für Digital Addressable Lighting Interfacesysteme.

Aus der Druckschrift DE 10 2008 043 721 A1 ist ein Haushaltsgerät mit einen Controller, umfassend ein Standby-Netzteil, das in einem Standby-Betrieb den Controller mit Energie versorgt, und der Controller in dem Standby-Betrieb einen Hauptschalter des Haushaltsgeräts überwacht und der Controller in dem Standby-Betrieb zumindest vorübergehend in einem Energiesparmodus betreibbar ist.

Die bekannten Schaltvorrichtungen und Schaltungsanordnungen haben sich zwar bewährt, sind aber insbesondere bei einem nachträglichen Einbau in eine vorhandene elektrische Infrastruktur, beispielsweise in einem Gebäude schlecht, gar nicht oder nur mit sehr hohen finanziellem Aufwand zu realisieren.

Insbesondere in Gebäuden mit den unterschiedlichsten Schaltkreisausführungen und den damit verknüpfbaren Steuerungen und Stromversorgungsmöglichkeiten für Klein- und Kleinstlasten ist dies nachteilig, da das Einstellen und Umbauen der Schaltparameter zeit- und damit kostenintensiv ist. Zu den Arbeitskosten kommen die eigentlichen Kosten für ein entsprechendes Steuergerät hinzu.

Es ist daher eine Aufgabe der vorliegenden Erfindung, Vorrichtung zu schaffen, mit denen die Einbau- und/oder Umbaukosten für die unterschiedlichsten elektrischen Schaltkreise gesenkt und elektrische Kleinverbraucher sicher und dauerhaft mit Strom versorgt werden können und zwar unabhängig davon, ob ein Schalter eines elektrischen Schaltkreises auf an oder aus geschaltet ist.

Diese Aufgabe wird durch die im Anspruch 1 angegebenen Merkmale gelöst, insbesondere dadurch, die Diode überbrückend zum Schalter eingebaut ist und entweder in oder entgegen der Stromflussrichtung des elektrischen Wechselstrom-Schaltkreis installiert ist und zur Steuerung des elektrischen Kleinstverbrauchers eine elektrische Schaltung die als eine Standby Powering Unit (SPU) ausgebildet ist und wenigstens eine Halbwellenerkennung, einen AC/DC Konverter und ein elektrisches Relais/Schalter umfasst, dem elektrischen Wechselstrom-Schaltkreis zugeordnet ist, so dass je nach Einbauart der Diode die Elektronik der SPU positive oder negative Halbwellen detektiert, sobald der Schalter geöffnet ist und die SPU den elektrischen Kleinverbraucher steuert und der SPU ein Mikroprozessor zugeordnet ist, über die der elektrische Kleinverbraucher zur Ansteuerung über eine Eingabeoberfläche in Form eines WebUI's (Web User Interface) oder in Form einer Anwender - Application für PC und/oder Mobiltelefon ansteuerbar ist, indem der Mikroprozessor das Betätigen eines Schalters über das Anliegen einer normalen Wechselspannung oder einer positiven oder negativen Halbwelle detektiert und hierdurch Informationen über den Schaltzustand des Schalters erhält, die über den Mikroprozessor zur Ansteuerung der Eingabeoberfläche in der WebUI oder der Applikation bereitgestellt werden.

Durch diese Maßnahme ist eine dauerhafte Versorgung von elektrischen Kleinverbrauchern über eine Installation möglich, so dass auf eine Fremdeinspeisung und/oder der Einbau von zusätzlichen elektrischen Bauteilen verzichtet werden kann.

Gemäß einer vorteilhaften Ausführungsform der erfindungsgemäßen Vorrichtung ist der Verbraucher ein elektrischer Kleinverbraucher. Dieser kann beispielsweise eine LED-Lampe oder der Gleichen sein.

Die Diode kann in einer weiteren Ausführungsform als halbwellenblockierender Halbleiter mit stromrichtungssperrenden Bauteilen (z.B. Schottky Diode) ausgebildet sein.

Es ist dabei vorgesehen, in einer vorhandenen Installation, beispielsweise einem (Licht)- Schalter eine Diode einzubauen. Diese bewirkt eine halbwellenspannungsversorgung über den Schalter.

Je nach Verschaltung der Diode werden positive und/oder negative Halbwellen der Wechselspannungen dem Verbraucher zur Verfügung gestellt. Dadurch kann eine dauerhafte Versorgung von Kleinverbrauchern (Sensoren und/oder stromsparenden LED-Lampen) mit Strom sichergestellt werden; auf eine Fremdeinspeisung von Strom kann verzichtet werden.

Zur Steuerung der elektrischen Kleinverbraucher ist, in einer besonders vorteilhaften Ausführungsform der vorliegenden Erfindung, eine elektrische Schaltung in der Art einer Standby Powering Unit (SPU) vorgesehen, die dem elektrischen Stromkreis zugeordnet ist, wobei die SPU wiederum den elektrischen Kleinverbraucher ansteuern und/oder regeln kann.

Durch die Verwendung eines Mikroprozessors in der SPU können weitere Funktionen implementiert werden. So kann hierdurch beispielsweise die Ansteuerung oder Zeitsteuerung einer Lampe oder unterschiedlichster Lastnehmer über eine Benutzereingabeoberfläche erfolgen. Die Benutzereingabeoberfläche kann wiederum dabei mittels eines Netzwerk-Anwender-Interface (WebUI) oder eine auf einem Mobiltelefon oder einer Rechnereinheit aufgespielten Application (App) erfolgen.

Die eingebaute Elektronik kann das Betätigen eines Schalters detektieren. Ist der Schalter geschlossen, liegt die normale Wechselspannung des Stromnetzes an der Elektronik an. Ist der Schalter jedoch geöffnet, entsteht entweder positive oder negative Halbwellen, je nach Installationsrichtung der Diode im vorhandenen Stromschaltkreis. Dadurch ist es möglich über den Zustand des Schalters Informationen zu erhalten und diese für weitere Anwendungen aufzuarbeiten, beispielsweise eine Betätigungsanzeige des Schalters in der oben genannten Eingabeoberfläche für einen Bediener über eine WebUI oder eine App.

Durch die besonders vorteilhafte Ausführungsform der Erfindung ist die Möglichkeit gegeben eine LED-Lampe unabhängig von dem Schaltzustand des Primärschalters (Lichtschalter) zu aktivieren. Im Zuge der Installation einer SPU Einheit wird dem Schaltkreis ein Sekundärschalter hinzugefügt, welcher den Lastverbraucher unabhängig vom Primärschalter steuern kann; mit der einzigen daran geknüpften Bedingung, dass der Primärschalter einmalig aktiviert (auf AN gestellt) werden muss. Die Ausführungsform des Sekundärschalters kann als Eingabeoberfläche (z.B. WebUI oder App), aber auch als eine alle gängigen Funk- und Infrarotstandards abdeckende Fernbedienung erfolgen.

In einer weiteren besonders vorteilhaften Ausführungsform der vorliegenden Erfindung, ist der elektrische Kleinverbraucher oder auch Lastnehmer ein Sensor, beispielsweise Raumüberwachung, ein Rauchmelder, ein Feuermelder, ein Bewegungssensor, eine Kamera.

Des Weiteren kann der elektrische Kleinverbraucher (Lastnehmer) ein Gerät zur Steuerung von Kommunikationstechnik basierend auf Licht, Funk und Akustik sein. Im Speziellen ist es ein Gerät zur Steuerung von Licht-LAN, W-LAN, Power-Line, Ultraschall, oder einer Funktechnik, für die Datenübertragung zwischen Geräten über kurze Distanzen mittels eines Wireless Personal Area Network (WPAN / Bluetooth)

Vorteilhaft wird die Diode in einer Ausschaltung überbrückend zum (Licht-) Schalter eingebaut und entweder in oder entgegen der Stromflussrichtung installiert. Je nach Einbauart detektiert die Elektronik der SPU positive oder negative Halbwellen, wenn der Schalter offen geschaltet ist. Weitere Installationen sind hierbei nicht möglich.

In einem Stromstoßschalter, bzw. in einer Stromstoßschalterschaltung mit Wechselstromrelais, wird die Diode überbrückend zum Stromstoßschalterkontakt eingebaut und entweder in oder entgegen der Stromflussrichtung installiert. Je nach Bauart detektiert die Elektronik der SPU positive oder negative Halbwellen, wenn der Schalter offen geschaltet ist. Vorteil dieser Installation ist, dass das Wechselstromrelais nicht ausgebaut werden muss.

Durch die Installation der Diode an einem Taster ist ein Austausch des Relais notwendig, da in dieses die SPU integriert werden muss. Werden mehrere Taster beispielsweise in einer Treppenschaltung verwendet, müssen pro weiteren Schalter, entsprechend weitere Dioden parallel eingebaut werden.

In einer Wechselschaltung ist, für einen minimalen Aufbau, die Installation einer Diode vorgesehen. Der Einbau der Diode erfolgt parallel zu einem der beiden (Licht-) Schalter der Wechselschaltung in oder entgegengesetzt der Stromflussrichtung. Die SPU erkennt daraufhin positive und negative Halbwellen, je nach geöffneter Schalterstellung. Diese Variante wird bei der Installation stets bevorzugt.

Durch die Verwendung von mehreren Dioden behält die Wechselschaltung ihre Funktion bei, der Einbauaufwand ist allerdings größer. Dabei werden zwei Dioden parallel auf je einer Seite in beliebiger Ausrichtung installiert und ermöglichen so eine dauerhafte Halbwellenstromversorgung.

Bei einer Kreuzschaltung müssen zwei Dioden installiert werden. Zur einfachen Erweiterbarkeit werden die Dioden hinter und vor einem Kreuzschalter eingebaut. Das Anbringen der Dioden kann dabei ohne Verlust der Funktionalität beliebig erfolgen. Wird die Schaltung dann um weitere Schalter erweitert, muss hinter jedem neu installierten Kreuzschalter eine weitere Diode eingebaut werden. Durch die Installation der Diode an einem der Schalter der Kreuzschaltung, ist eine einfache Erweiterung durch neue installierte Kreuzschalter nicht mehr möglich.

Bei einer Sparwechselschaltung gibt es vier Möglichkeiten die Diode zu Installieren: Eine Diode auf der Seite des einen Schalters oder eine Diode auf der Seite des anderen Schalters, zusätzlich kann die Diodenausrichtung vertauscht werden.

Bei einer Serienschaltung mit zwei Wippen werden aufgrund der zwei separaten Stromkreise auch zwei SPU's benötigt. Um beide Schaltungen durchgängig mit Strom zu versorgen, müssen zwei Dioden überbrückend zum Schalter in gleicher Ausrichtung installiert werden. Je nach Diodenausrichtung werden positive oder negative Halbwellen detektiert wenn der Schalter geöffnet ist. Wird der Schalter betätigt, werden beide SPU's gleichzeitig mit Strom versorgt.

Bei einer Serienschaltung als Drehschalter ist der Aufbau identisch zum Serienschalter mit zwei Wippen, jedoch ist eine separate Stromversorgung der SPU's möglich; entsprechend der Stellung des Drehschalters. Eine Veränderung hinsichtlich des Diodeneinbaus ergibt sich durch den Drehschalter nicht.

In einem Taster in einer Ausführungsform als Öffner ist die Diode parallel zu dem Öffner zu installieren, um die SPU beim Betätigen des Öffners weiterhin mit Strom versorgen zu können. Je nach Diodenausrichtung wird dabei der Zustand des Tasters durch positive oder negative Halbwellen bestimmt. Bei jedem weiteren in Reihe installierten Öffner muss eine weitere Diode parallel eingebaut werden.

In einer Ausführungsform des Tasters als Schließer in einer Klingelschaltung mit Wechselstrom werden die Dioden parallel zum Schließer eingebaut. Durch den Einbau der Diode parallel zum Schließer, ist es möglich die SPU dauerhaft mit Strom zu versorgen. Dabei ist es vorgesehen, dass die Klingel über eine Bedienoberfläche (WebUI/App) angesteuert werden kann.

In einer Untervarianten als Low-Voltage Supply ist die direkte Versorgung von Kleinstverbrauchern direkt im Schalter selbst durch die zusätzliche Installation einer in Reihe zum Schalter befindlichen Dioden möglich. Es werden somit zwei Dioden für die Low-Voltage Variante benötigt. Dabei gilt, dass die Spannung des Verbrauchers kleiner der Schwellenspannung der Dioden ist. Über der parallel zum geöffneten Schalter und der zweiten Diode installierten ersten Diode fällt die Schwellenspannung ab. Es fließt ein kleiner Strom, der Kleinstverbraucher versorgen kann. Da im geschlossenen Schalterzustand der Spannungsabfall über der parallel installierten Diode auch benötigt wird, ist der Einbau einer zweiten zusätzlichen Diode in entgegengesetzter Richtung zur ersten Diode in Reihe zum Schalter notwendig.

In einer weiteren Untervariante kann anstatt der einzelnen Diode auch eine LED (Licht emittierende Diode) verwendet werden. Da die LED die gleichen Grundeigenschaften wie eine Diode aufweist, ist eine dauerhafte Versorgung der SPU auch in dieser Verschaltungsform gewährleistet. Ist der Schalter geöffnet, leuchtet die LED und kann damit als Notbeleuchtung in der Dunkelheit dienen. Ist der Schalter geschlossen, detektiert die SPU entweder positive oder negative Halbwellen, je nach Verschaltung der LED.

Durch die besonders vorteilhafte Installation der Diode ist an der SPU eine Detektion der anliegenden Halbwellen möglich. Je nach Ausführungsform der Schaltung, der Verschaltungsart der Diode und des Zustandes des Schalters liegen positive, negative oder beide Halbwellen an der Elektronik der SPU an. Durch den Wechsel von der Wechselspannung (beide Halbwellen liegen an und der Schalter ist geöffnet) lassen sich Informationen zu den Schaltzuständen, bzw. Schaltübergängen gewinnen und entsprechend der Ausführungsform auswerten. Es lässt sich somit die Veränderung des Schaltzustandes aus diesen Informationen ableiten.

Die Erfindung wird im Folgenden anhand beispielhafter Ausführungsformen für die Verschaltungsmöglichkeiten der Dioden in Schaltkreisen unter Bezugnahme auf die beigefügten Zeichnungen näher erläutert. Dabei erhalten gleiche Bauelemente gleiche Bezugszeichen. Es zeigen:
- **Figur 1**: Den Einbau der Diode in Stromflussrichtung in einer Ausschaltung;
- **Figur 2**: den Einbau einer Diode in einer Sparwechselschaltung;
- **Figur 3**: eine Variante des Einbaus der Diode parallel zum Stromstoßschalterkontakt für einen Stromstoßschalter;
- **Figur 4**: den beispielhaften Einbau von zwei Dioden in einer zweiten Variante für einen Stromstoßschalter, mit einem in der SPU integrierten Relais;
- **Figur 5**: den Einbau und die Verschaltung von einer Dioden in einer ersten Variante der Wechselschaltung;
- **Figur6**: den Einbau und die Verschaltung von zwei Diode in einer zweiten Variante der Wechselschaltung;
- **Figur 7**: eine erste Variante des Einbaus von zwei Dioden für eine Kreuzschaltung;
- **Figur 8**: eine zweite Variante des Einbaus von zwei Dioden in einer Kreuzschaltung;
- **Figur 9**: den Einbau von zwei Dioden mit zwei, den Verbrauchern zugeordneten SPU's in einem Serienschalter mit zwei Wippen;
- **Figur 10**: den Einbau von zwei Dioden und zwei SPU's in einer Serienschaltung mit Drehschalter;
- **Figur 11**: den Einbau einer Diode in einem als Taster ausgebildeten Öffner, mit installierter SPU;
- **Figur 12**: den Einbau einer Diode in einer als Taster ausgebildeten Klingelschaltung (Wechselstrom), mit einer installierten SPU;
- **Figur 13**: den Einbau von zwei entgegengesetzt angeordneten Dioden in einer Low-Voltage-Supply Schaltung als eine Untervariante der vorliegenden Erfindung zur direkten Versorgung von Kleinstverbrauchern direkt im Schalter mit Strom;
- **Figur 14**: eine weitere Untervariante der vorliegenden Erfindung, wobei zur Überbrückung des Schalters eine LED zugeordnet ist;
- **Figur 15**: ein Blockschaltbild der in der vorliegenden Erfindung verwendeten SPU;
- **Figur 16**: ein Blockschaltbild gemäß Fig. 15, ohne galvanische Trennung der SPU.

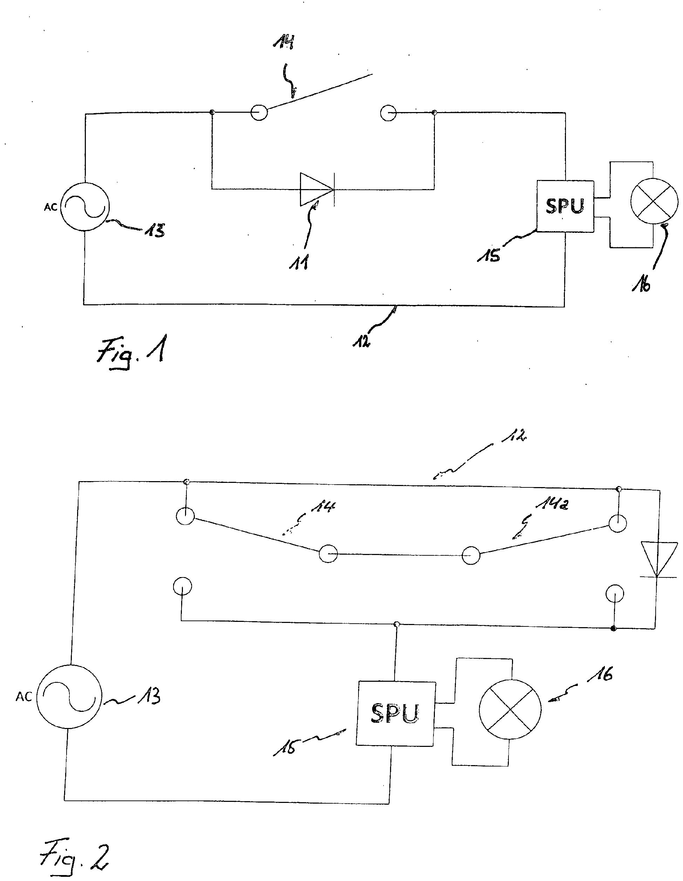

Figur 1 zeigt die Vorrichtung 10 in einer Ausführungsform als Ausschaltung. Hierbei wird die Diode 11 in einem elektrischen Stromkreis 12, der dauerhaft mit einer Wechselstromquelle 13 verbunden ist, überbrückend zum (Licht-) Schalter 14 eingebaut. Die Diode 11 kann entweder in oder entgegen der Stromflussrichtung installiert sein. Dem elektrischen Schaltkreis 12 ist ferner eine sog. Standby Powering Unit 15 (SPU) zugeordnet, an die ein Lastnehmer bzw. ein Verbraucher 16 angeschlossen ist. Je nach Einbauart detektiert die Elektronik der SPU positive oder negative Halbwellen, wenn der Schalter 14 offen geschaltet ist. Die beispielhaft dargestellte Ausschaltung in Figur 1 detektiert positive Halbwellen. Weitere Installationsmöglichkeiten sind hierbei nicht möglich.

Figur 2 ist die Darstellung der Vorrichtung 10 für eine Sparwechselschaltung. Bei der Sparwechselschaltung gibt es vier Möglichkeiten die Diode 11 zu installieren: Auf der Seite des einen Schalters 14 oder auf der Seite des anderen Schalters 14a bzw. mit vertauschter Diodenausrichtung im elektrischen Schaltkreis 12. In Figur 2 ist eine der vier möglichen Verschaltungen der Diode 11 beispielhaft dargestellt. Der elektrische Schaltkreis 12 der Sparwechselschaltung verfügt über eine dauerhaft angeschlossen Wechselstromquelle 13. Dem elektrischen Schalkreis 12 sind ebenfalls eine SPU 15 und ein Lastnehmer 16 zugeordnet. In der beispielhaft dargestellten Fig. 2 detektiert die Elektronik der SPU positive Halbwellen und kann erkennen, dass einer der Schalter 14, 14a betätigt worden ist.

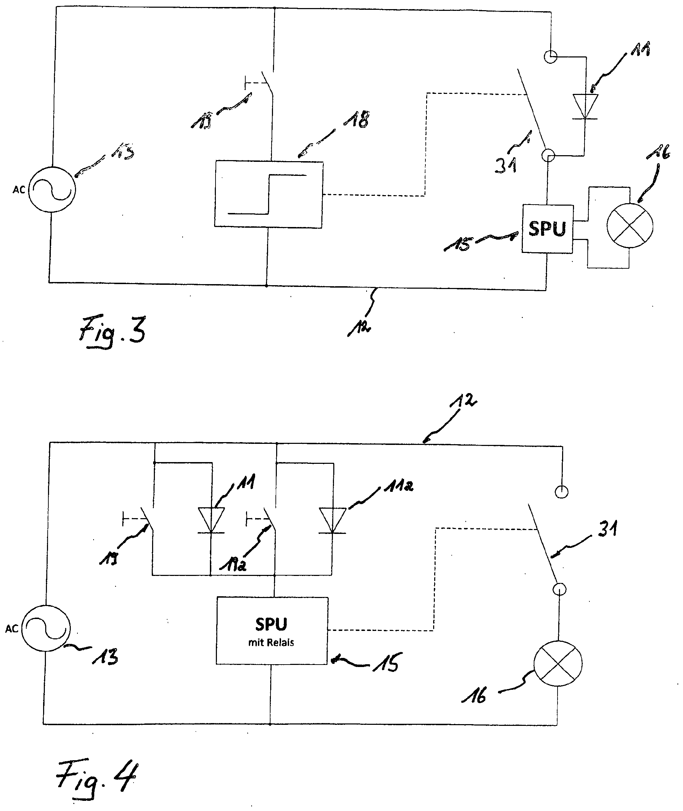

Die Figur 3 zeigt eine erste mögliche Variante der Verschaltung der Diode 11 in einem Stromstoßschalter 18. Hierbei ist die Diode 11 überbrückend zum Stromstoßschalterkontakt 31 des Stromstoßschalters 18 und dessen zugeordneten Tasters 19 eingebaut und entweder in oder entgegen der Stromflussrichtung zu installieren. Je nach Einbauart detektiert die Elektronik der SPU 15 positive oder negative Halbwellen, wenn der Stromschalterkontakt 31 offen geschaltet ist. Bei einem vorinstallierten Stromstoßschalter 18 muss das Wechselstromrelais nicht ausgetauscht werden. Die Stromstoßschaltung gemäß der Figur 3 detektiert positive Halbwellen. Auch hier ist eine Wechselstromquelle 13, die mit der SPU 15 über einen elektrischen Schaltkreis 12 verbunden ist, und ein mit der SPU 15 verbundener Lastnehmer 16, vorgesehen.

Figur 4 ist die Darstellung einer zweiten Variante der Installation der Diode 11, 11a an dem Taster 19, 19a in einem elektrischen Schaltkreis 12, dem eine Wechselstromquelle 13 und ein Lastnehmer 16 zugeordnet sind. Durch die Installation der Diode 11, 11a an dem Taster 19, 19a ist ein Austausch des Relais notwendig, da dieses in die SPU 15 integriert werden muss. Werden mehrere Taster, beispielsweise in einer Treppenschaltung, parallel verwendet, müssen pro weiterem Taster 19, 19a weitere Dioden 11, 11a eingebaut werden.

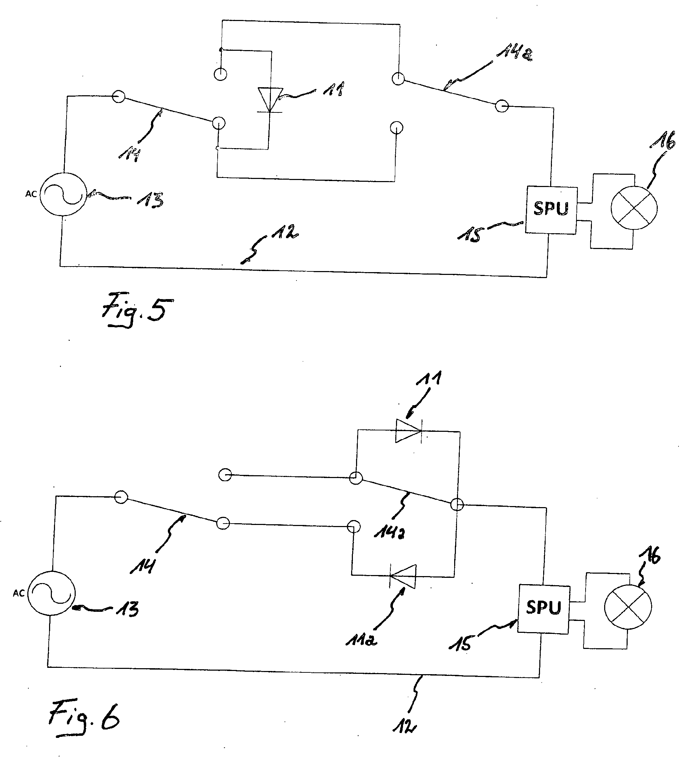

Figur 5 zeigt eine erste Variante des Einbaus der Diode 11 in einer Wechselschaltung. Der einfachste Aufbau mit den geringsten Materialkosten umfasst eine Diode 11, die parallel zu einem der beiden (Licht-) Schalter 14, 14a angeordnet ist. Die dem elektrischen Stromkreis 12 zugeordnete SPU 15 erkennt darauf hin positive und negative Halbwellen, je nach geöffneter Schalterstellung. Des Weiteren ist eine Verbauung der Diode 11 entgegengesetzt und/oder an dem jeweils anderen Schalter 14, 14a möglich. Der Lastnehmer 16 ist auch hier direkt mit der SPU 15 verbunden.

Figur 6 ist eine Darstellung des Einbaus und der Verschaltung von zwei Dioden 11, 11a in einer zweiten Variante der Wechselschaltung. Hierbei werden zwei Dioden 11, 11a parallel auf je einer Seite des Schalters 14, 14a in beliebiger Ausrichtung zur Stromflussrichtung im elektrischen Stromkreis 12 installiert. Dadurch behält die Schaltung ihre Funktion der dauerhaften Halbwellenstromversorgung des Lastnehmers 16, der mit der SPU 15 verbunden ist, bei. Die SPU 15 detektiert positive und negative Halbwellen, je nach geöffneter Schalterstellung.

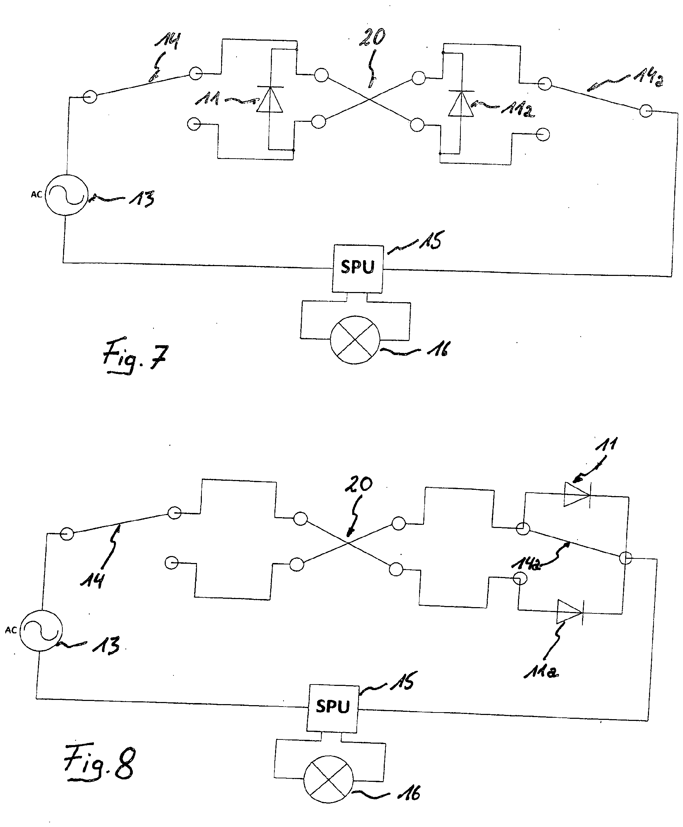

Figur 7 ist die Darstellung eine erste Variante des Einbaus von zwei Dioden 11, 11a für eine Kreuzschaltung. Bei der Kreuzschaltung müssen zwei Dioden 11, 11a installiert werden. Zur einfachen Erweiterbarkeit werden die Dioden 11, 11a hinter und vor dem Kreuzschalter 20 eingebaut, wie dies in der Figur 7 dargestellt ist. Das Anbringen der Dioden 11, 11a kann dabei ohne Verlust der Funktionalität beliebig erfolgen. Wird die Schaltung dann um weitere Kreuzschalter erweitert, sollte hinter jedem neu installierten Kreuzschalter eine weitere Diode angebracht werden. Durch die Detektion von positiven und negativen Halbwellen, je nach geöffneter Schalterstellung, erhält die SPU Informationen, dass einer der Schalter 14, 14a, bzw. der Kreuzschalter 20 betätigt wurde.

Die Figur 8 zeigt eine zweite Variante des Einbaus von zwei Dioden 11, 11a in einer Kreuzschaltung. Durch die Installation der Dioden 11, 11a an einem der Schalter 14, 14a (hier dargestellt ist die Installation der Dioden 11, 11a an dem Schalter 14a), wird die Funktion nicht beeinträchtigt. Eine einfache Erweiterung durch zusätzlich neu installierte. Kreuzschalter ist jedoch nicht mehr möglich. Die Detektion der Halbwellen ist identisch zu der gemäß Fig. 7, ebenso die Informationen über die Schaltzustände.

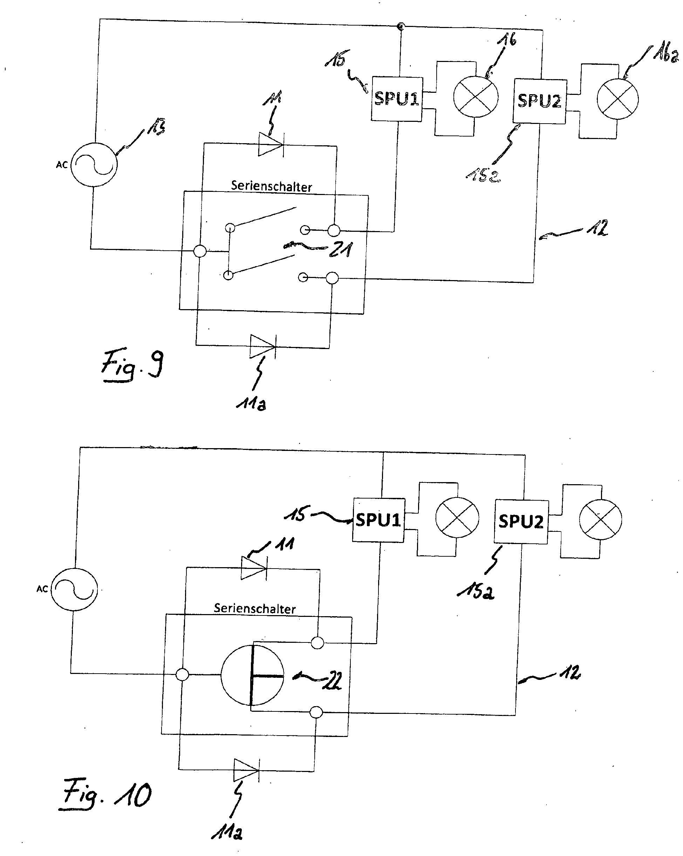

Die Figur 9 zeigt den Einbau von zwei Dioden 11, 11a mit zwei, den Verbrauchern 16, 16a zugeordneten SPU's 15, 15a in einer zwei Wippen 21 umfassenden Serienschaltung. Bei der Serienschaltung mit zwei Wippen 21 werden zwei SPU's 15, 15a benötigt. Um diese durchgängig mit Strom zu versorgen müssen auch zwei Dioden 11, 11a installiert werden. Diese können beliebig im Stromkreis 12 ausgerichtet sein, müssen aber den Wippschalter 21 überbrücken. Wird der Wippschalter 21 betätigt, werden beide SPU's 15, 15a und somit auch die mit den SPU's verbundenen Lastnehmer 16, 16a mit Strom versorgt. Durch die Detektion von positiven oder negativen Halbwellen kann die SPU Informationen über den Zustand des Serienschalters 21 erhalten.

Die Figur 10 zeigt den Einbau von zwei Dioden 11, 11a und zwei SPU's 15, 15a in einer Serienschaltung mit einem Drehschalter 22, der in einem elektrischen Stromkreis 12 angeordnet ist. Grundsätzlich ist der Aufbau der Verschaltung der Dioden 11, 11a und der SPU's 15, 15a identisch zum Serienschalter mit zwei Wippen, gemäß der dargestellten Figur 9. Zu unterscheiden ist hier jedoch die separate Stromversorgung der SPU's 15, 15a entsprechend der Stellung des Drehschalters 22. Eine Beeinträchtigung hinsichtlich des Diodeneinbaus ergibt sich dadurch nicht. Durch die unabhängige Detektion der anliegenden Halbwellen beider SPU's und einer möglichen Kommunikation untereinander lässt sich der Schaltzustand des Drehschalters 22 exakt ermitteln.

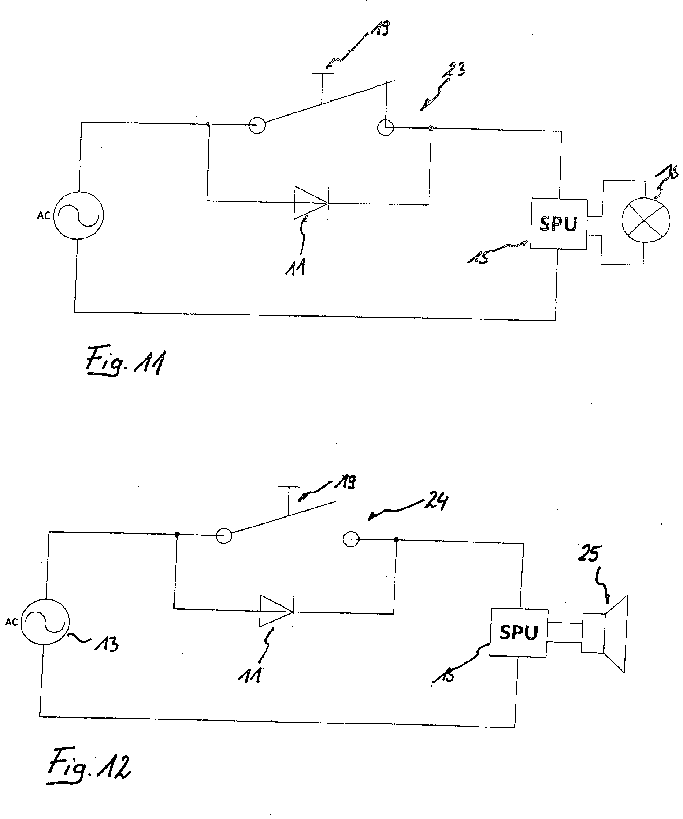

Die Figur 11 stellt den Einbau der Diode 11 in einem als Taster 19 ausgebildeten Öffner 23, mit installierter SPU 15 dar, die mit dem Lastnehmer 16 verbunden ist. Hierbei wird die Diode 11 parallel zu dem Öffner 23 installiert, um die SPU beim Betätigen des Öffners 23 weiterhin mit Strom versorgen zu können. Bei jedem weiteren installierten Öffner 23 muss eine weitere Diode parallel und in gleicher Ausrichtung zum Öffner eingebaut werden. Je nach Diodenausrichtung detektiert die Elektronik der SPU positive oder negative Halbwellen.

Die Figur 12 zeigt den Einbau der Diode 11 in einer als Taster 19 ausgebildeten Schließer 24 als Klingelschaltung, die mit der Wechselstromquelle 13 verbunden ist. Durch den Einbau der Diode 11 parallel zum Schließer 24, ist es möglich die SPU dauerhaft mit Strom zu versorgen. Die der SPU 15 zugeordnete Klingel 25 kann über eine Bedienoberfläche eines WebUI oder über eine App angesteuert werden.

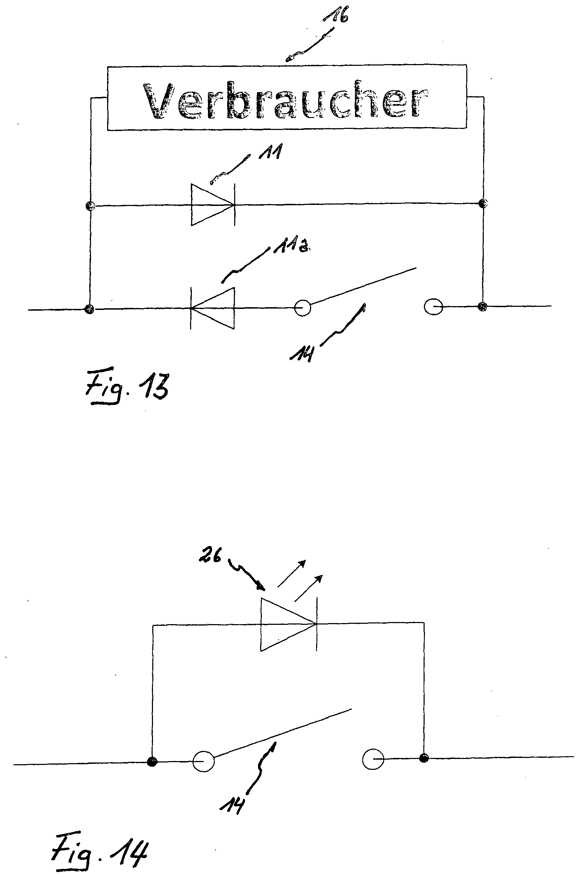

Die Figur 13 zeigt den Einbau von zwei entgegengesetzt angeordneten Dioden 11, 11a in einer Low-Voltage-Supply Schaltung für eine Untervariante der vorliegenden Erfindung zur direkten Versorgung von Kleinstverbrauchern bzw. Lastnehmern 16 im Schalter 14 mit Strom. Die direkte Versorgung von Lastnehmern 16 mit sehr niedrigem Stromverbrauch, die im Schalter 14 angeordnet sind, können beispielsweise Notbeleuchtungen mit einer entsprechenden Spannung versorgt werden. Über der parallel zum Schalter installierten Diode 11 fällt bei geöffnetem Schalter 14 die Schwellenspannung ab. Es fließt ein kleiner Strom, der dazu dient Lastnehmer bzw. Kleinstverbraucher mit Strom zu versorgen. Da der Spannungsabfall auch benötigt wird, wenn der Schalter geschlossen wird, muss eine zusätzliche Diode 11a in entgegengesetzter Richtung zur Diode 11 in Reihe zum Schalter 14 werden. Dabei gilt: Verbraucherspannung muss kleiner der Diodenschwellenspannung sein.

In Figur 14 ist eine weitere Untervariante der vorliegenden Erfindung dargestellt. Anstatt einer Diode zur Überbrückung des Schalters 14 wird eine LED verwendet. Eine LED weist die Eigenschaften einer Diode auf und kann dadurch die SPU 15 (nicht dargestellt) auch dauerhaft mit Strom versorgen. Ist der Schalter geöffnet dient die LED als Notbeleuchtung.

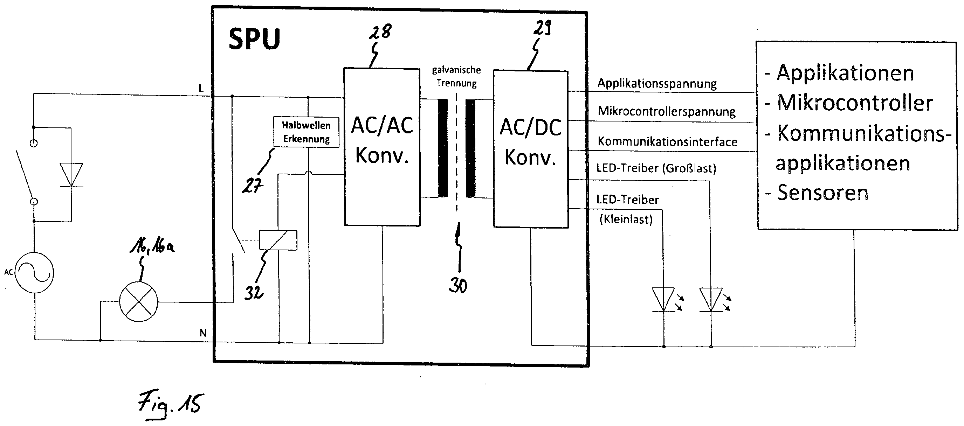

Die Figur 15 zeigt das Blockschaltbild der SPU 15, 15a mit galvanischer Trennung 30. Die SPU 15, 15a verfügt über eine Halbwellenerkennung 27, die mit einem AC/AC-Konverter 28 (Wechselstromwandlung) verbunden ist. Die Steuerung der Last erfolgt über ein integriertes Schaltrelais 32 oder einen elektrischen Schalter. Durch die galvanische Trennung 30 wird die Netzspannung entkoppelt und sorgt für eine höhere Sicherheit. Nach der galvanischen Trennung erfolgt durch einen AC/DC-Konverter 29 (Wechselstrom zu Gleichstromstromwandlung) eine Bereitstellung der geforderten Spannungen. Dabei ist der AC/DC-Konverter 29 so ausgebildet, dass er verschieden große Spannungen, passend zur entsprechenden Anwendung (Applikation- und Mikrocontrollerspannung) zu Verfügung stellen kann. Der in die SPU 15,15a integrierte LED-Treiber kann eine Kleinlast-LED ansteuern, wenn nur eine Halbwellenspannungsversorgung stattfindet, oder/und eine Großlast-LED, wenn die Wechselspannung anliegt. Das Einschalten des Lastnehmers 16, 16a (Verbraucher) kann einerseits automatisch durch die Detektion der Wechselspannung an der SPU mit Hilfe der integrierten Halbwellenerkennung 27 erfolgen. Andererseits lassen sich über Kommunikationsinterface Steuersignale eines optionalen Microcontrolers an das Schaltrelais 32 bzw. an einen elektrischen Schalter senden, wodurch der Lastnehmer 16, 16a (Verbraucher) auch gesteuert werden kann.

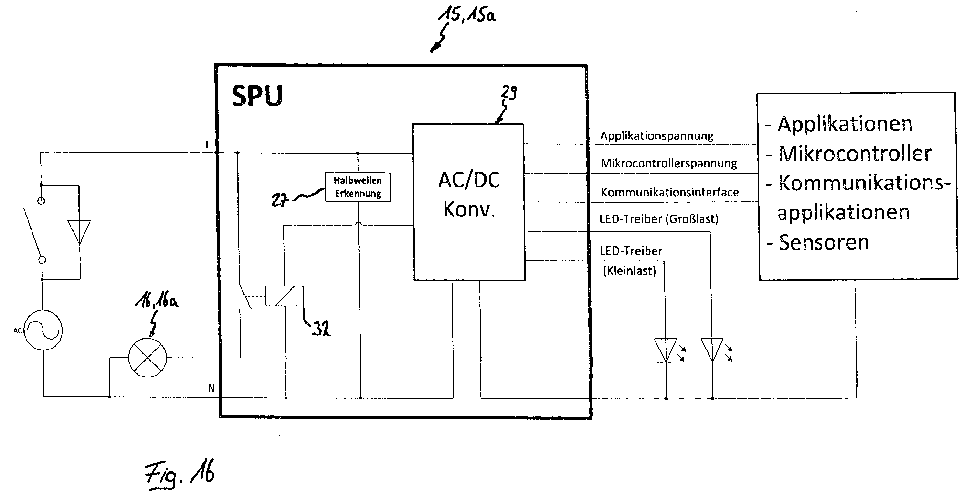

Die Figur 16 zeigt das Blockschaltbild der SPU 15, 15a ohne galvanische Trennung, welche bis auf diese Einsparung vollkommen identisch arbeitet wie mit galvanischer Trennung gemäß Fig. 15. Durch die Einsparung wird eine Möglichkeit geschafften die SPU 15, 15a zu verkleinern.

### Applikationen können sein:

Für Kleinstlasten (Low-Voltage-Supply), für Verbraucher die mit Diodenschwellenspannungen versorgt werden können, beispielsweise Sensoren, insbesondre Bewegungssensoren oder Akustikapplikationen, insbesondere Internet-Radio.

Für Kleinlasten, für Verbraucher die mit einer Halbwelle versorgt werden können, beispielsweise Beleuchtungen, insbesondere LED und Notbeleuchtungen oder Sensoren zur Raumüberwachung, Rauchmelder, Feuermelder, Bewegungssensoren, Raumüberwachung mit Kamera oder zur Kommunikation, insbesondere auf Licht, Funk und Akustik basierende Kommunikationstechnik, beispielsweise Licht-LAN, W-LAN, Power-Line, Infrarot, Ultraschall, Bluetooth. Auch sind Aktoren, wie beispielsweise Elektromotoren die mit einer Halbwelle betreibbar sind, denkbar.

Für Verbraucher mit Normallast, die mit Wechselspannung betrieben werden, beispielsweise Glühbirnen, Leuchtstofflampen, Halogenlampen, Hochleistungs-LED's.

Auch die SPU 15, 15a gemäß Fig. 16 verfügt über eine Halbwellenerkennung 27, die mit einem AC/DC-Konverter 29 verbunden ist. Die Steuerung der Last erfolgt über ein integriertes Schaltrelais 32 oder einen elektrischen Schalter. Durch den AC/DC-Konverter 29 (Wechselstrom zu Gleichstromstromwandlung) erfolgt eine Bereitstellung der geforderten Spannungen. Dabei ist der AC/DC-Konverter 29 so ausgebildet, dass er verschieden große Spannungen, passend zur entsprechenden Anwendung (Applikation- und Mikrocontrollerspannung) zu Verfügung stellen kann. Der in die SPU 15,15a integrierte LED-Treiber kann eine Kleinlast-LED ansteuern, wenn nur eine Halbwellenspannungsversorgung stattfindet, oder/und eine Großlast-LED, wenn die Wechselspannung anliegt. Das Einschalten des Lastnehmers 16, 16a (Verbraucher) kann einerseits automatisch durch die Detektion der Wechselspannung an der SPU mit Hilfe der integrierten Halbwellenerkennung 27 erfolgen. Andererseits lassen sich über Kommunikationsinterface Steuersignale des Microcontrolers an das Schaltrelais 32 bzw. an einen elektrischen Schalter senden, wodurch der Lastnehmer 16, 16a (Verbraucher) auch gesteuert werden kann.

### Bezugszeichen

- 10: Vorrichtung
- 11, 11a: Diode
- 12: elektrischer Stromkreis (Schaltkreis)
- 13: Wechselstromquelle
- 14, 14a: Schalter
- 15, 15a: SPU (Standby Power Unit)
- 16, 16a: Lastnehmer/Verbraucher
- 17: Sparwechselschaltung
- 18: Stromstoßschalter
- 19, 19a: Taster
- 20: Kreuzschalter
- 21: Wippe
- 22: Drehschalter
- 23: Öffner
- 24: Schließer
- 25: Klingel
- 26: LED (Light Emitting Diode)
- 27: Halbwellenerkennung
- 28: AC/AC Konverter
- 29: AC/DC Konverter
- 30: galvanische Trennungen
- 31: Stromstoßschaltkontakt
- 32: Schaltrelais / elektrischer Schalter

## Patentansprüche

1. Vorrichtung zur dauerhaften Versorgung eines Klein- oder Kleinstverbrauchers(16) mit Energie, in einem vorhandenen elektrischen Wechselstrom-Schaltkreis (12) dem ein Schalter (14, 14a) mit einer Diode (11, 11a) zugeordnet ist und über den der Klein- oder Kleinstverbraucher (16) durch den elektrischen Wechselstrom-Schaltkreis (12) über den Schalter (14, 14a) mit der Diode (11, 11a) mit einer Halbwellenspannung dauerhaft mit elektrischen Strom aus dem elektrischen Wechselstrom-Schaltkreis (12) versorgbar ist, unabhängig davon, ob der Schalter (14, 14a) den elektrischen Wechselstrom-Schaltkreis (12) öffnet oder schließt, **dadurch gekennzeichnet, dass** die Diode (11, 11a) überbrückend zum Schalter (14, 14a) entweder in oder entgegen der Stromflussrichtung des elektrischen Wechselstrom-Schaltkreis (12) eingebaut ist und zur Steuerung des elektrischen Klein- oder Kleinstverbrauchers (16) eine elektrische Schaltung (15, 15a), die als Standby Powering Unit (SPU) ausgebildet ist und wenigstens eine Halbwellenerkennung (27), einen AC/DC Konverter (29) und ein elektrisches Relais/Schalter (32) umfasst, dem elektrischen Wechselstrom-Schaltkreis (12) zugeordnet ist, so dass je nach Einbauart der Diode in dem Schalter (14, 14a) die Elektronik der elektrischen Schaltung (15, 15a), sobald der Schalter (14, 14a) geöffnet ist, positive oder negative Halbwellen detektiert, wobei die elektrische Schaltung (15, 15a) den elektrischen Klein- oder Kleinstverbraucher (16) steuert und der elektrischen Schaltung (15, 15a) ein Mikroprozessor zugeordnet ist, über die der elektrische Klein- oder Kleinstverbraucher (16) durch eine Eingabeoberfläche in Form eines WebUI's (Web User Interface) oder einer Anwender - Application für PC und/oder Mobiltelefon ansteuerbar ist, indem der Mikroprozessor das Betätigen des Schalters (14, 14a) über das Anliegen einer normalen Wechselspannung oder einer positiven oder negativen Halbwelle des elektrischen Wechselstrom-Schaltkreises (12) detektiert und hierdurch Informationen über den Schaltzustand des Schalters (14, 14a) erhält, wobei diese Informationen über den Schaltzustand des Schalters (14, 14a) über den Mikroprozessor zur Ansteuerung der Eingabeoberfläche in der WebUI oder der Applikation verwendbar sind.

2. Vorrichtung nach den vorangehenden Anspruch 1, **dadurch gekennzeichnet, dass** in einer Serienschaltung mit zwei Wippen (21) zwei elektrische Schaltungen (15, 15a) angeordnet sind, wobei zur durchgängigen Versorgung der elektrischen Schaltungen (15, 15a) mit Strom zwei Dioden (11, 11a) in beliebiger Ausrichtung so angeordnet sind, dass diese den Schalter (14, 14a) überbrücken.

3. Vorrichtung nach Anspruch 1 und 2, **dadurch gekennzeichnet, dass** die Diode (11, 11a) durch eine LED ersetzt wird.

4. Vorrichtung nach Anspruch 1 oder 2, **dadurch gekennzeichnet, dass** über die im elektrischen Wechselstrom-Schaltkreis (12) installierte Diode (11, 11a) durch die Elektronik der elektrischen Schaltung (15, 15a) eine Detektion der anliegenden Halbwelle erfolgt, wobei je nach Ausführungsform der Schaltung und der Verschaltungsart der Diode (11, 11a) und des Schaltzustandes des Schalters (14, 14a) im Schaltkreis (12) positive oder negative oder beide Halbwellen an der Elektronik der elektrischen Schaltung (15, 15a) anliegen und wobei durch den Wechsel von einer Wechselspannung, bei der beide Halbwellen an der elektrischen Schaltung (15, 15a) anliegen, zu einer positiven oder negativen Halbwelle, die an der elektrischen Schaltung (15, 15a) anliegt, Informationen zu den Schaltzuständen, bzw. Schaltübergängen erzeugbar sind, so dass eine Veränderung des Schaltzustandes im Schaltkreis (12) aus diesen Informationen ableitbar ist.

5. Vorrichtung nach Anspruch 4, **dadurch gekennzeichnet, dass** je nach detektierter anliegender Spannung eine Kleinlast-LED, wenn nur eine Halbwellenspannungsversorgung oder eine Großlast-LED wenn beide Halbwellenspannungen anliegen über die elektrische Schaltung (15, 15a) angesteuert werden, wobei durch die Detektion des Schalterzustandes des Schalters (14, 14a) das Einschalten des Lastnehmers (16, 16a) einerseits automatisch oder über externe Steuersignale erfolgen.

6. Vorrichtung nach Anspruch 5, **dadurch gekennzeichnet, dass** die Detektion der an der elektrischen Schaltung (15, 15a) anliegenden Spannung eine Halbwellenerkennung (27), die mit einem AC/AC-Konverter verbunden ist und die Ansteuerung des Lastnehmers (16, 16a) über einen integriertes Schaltrelais (32) oder einen elektrischen Schalter (14, 14a) erfolgt, dass mit dem AC/AC-Konverter verbunden ist.

7. Vorrichtung nach Anspruch 5, **dadurch gelkennzeichnet, dass** der elektrischen Schaltung (15, 15a) eine galvanische Trennung (30) zugeordnet ist, über die die Netzspannung des elektrischen Wechselstrom-Schaltkreises (12) entkoppelbar ist, und nach der galvanischen Trennung der Netzspannung durch einen AC/DC Konverter (29) eine Bereitstellung der vom Lastnehmer (16, 16a) geforderten Spannung erfolgt.

8. Vorrichtung nach den Anspruch 1, **dadurch gekennzeichnet, dass** der elektrische Kleinverbraucher (16) ein Sensor, für eine Raum-, Rauch-, Feuer- oder Bewegungsüberwachung oder Leuchtmittel, beispielweise eine LED-Lampe oder eine Kamera, Mikrofon, Lautsprecher ist.

9. Vorrichtung nach Anspruch 1, **dadurch gekennzeichnet, dass** der elektrische Kleinverbraucher (16) ein Gerät zur Steuerung von auf Licht, Funk und Akustik basierende Kommunikationstechnik ist.

10. Vorrichtung nach Anspruch 1, **dadurch gekennzeichnet, dass** der elektrische Kleinverbraucher (16) ein Gerät zur Steuerung von Licht-LAN, W-LAN, Power-Line, Ultraschall, Bluetooth ist.

## Claims

1. A device for permanently supplying a small or very small load (16) with energy, in an existing electrical alternating current circuit (12) with a switch (14, 14a) with a diode (11, 11a) being associated therewith and through which the small or very small load (16) can be permanently supplied with electrical current in the form of a half-wave voltage from the electrical alternating current circuit (12) through the electrical alternating current circuit (12) via the switch (14, 14a) with the diode (11, 11a), irrespective of whether the switch (14, 14a) opens or closes the electrical alternating current circuit (12), **characterized in that** the diode (11, 11a) is installed bridging the switch (14, 14a) either in the direction or opposite direction of current flow of the electrical alternating current circuit (12) and an electrical circuit (15, 15a) for controlling the small or very small electrical load (16) designed as a standby powering unit (SPU) and comprising at least one half-wave detection (27), an AC/DC converter (29) and an electrical relay/switch (32) is associated with the electrical alternating current circuit (12), such that, depending on the type of installation of the diode in the switch (14, 14a), the electronics of the electrical circuit (15, 15a) detects positive or negative half-waves as soon as the switch (14, 14a) is open, wherein the electrical circuit (15, 15a) controls the small or very small electrical load (16) and a microprocessor is associated with the electrical circuit (15, 15a) through which the small or very small electrical load (16) is drivable by means of an input interface in form of a WebUI (Web User Interface) or a user application for PC and/or mobile telephone by detecting, by the microprocessor, actuation of the switch (14, 14a) via the application of a normal alternating voltage or a positive or negative half-wave of the electrical alternating current circuit (12) and thus obtaining information about the switching state of the switch (14, 14a), wherein this information about the switching state of the switch (14, 14a) can be used via the microprocessor for driving the input interface in the WebUI or the application.

2. The device according to the preceding claim 1, **characterized in that** two electrical circuits (15, 15a) are arranged in a series circuit with two rockers (21), wherein two diodes (11, 11a) are arranged in any orientation in such a way that they bridge the switch (14, 14a) to continuously supply the electrical circuits (15, 15a) with current.

3. The device according to claims 1 and 2, **characterized in that** the diode (11, 11a) is substituted with an LED.

4. The device according to claims 1 or 2, **characterized in that** the applied half-wave is detected by the electronics of the electrical circuit (15, 15a) via the diode (11, 11a) installed in the electrical alternating current circuit (12), wherein, depending on the design of the circuit and the type of connection of the diode (11, 11a) and the switching state of the switch (14, 14a) in the circuit (12), positive or negative half-waves or both are applied to the electronics of the electrical circuit (15, 15a) and wherein the change from an alternating voltage in which both half-waves are applied to the electrical circuit (15, 15a) to a positive or negative half-wave which is applied to the electronic circuit (15, 15a) can generate information about the switching states, or switching transitions such that a change in the switching state in the circuit (12) can be derived from this information.

5. The device according to claim 4, **characterized in that**, depending on the applied voltage detected, a low-load LED is driven via the electrical circuit (15, 15a) if only a half-wave voltage supply is applied or a high-load LED is driven if both half-wave voltages are applied, wherein activating the consumer load (16, 16a) is either performed automatically or via external control signals through detection of the switch state of the switch (14, 14a).

6. The device according to claim 5, **characterized in that** the detection of the voltage applied to the electrical circuit (15, 15a) is a half-wave detection (27) connected to an AC/AC converter and the driving of the consumer load (16, 16a) is carried out via an integrated switching relay (32) or an electrical switch (14, 14a) connected to the AC/AC converter.

7. The device according to claim 5, **characterized in that** a galvanic isolation (30) is associated with the electrical circuit (15, 15a) through which the mains voltage of the electrical alternating current circuit (12) can be isolated and after the galvanic isolation of the mains voltage by an AC/DC converter (29) the voltage required by the consumer load (16, 16a) is provided.

8. The device according to claim 1, **characterized in that** the small electrical load (16) is a sensor for room, smoke, fire or motion monitoring or a lamp, for example an LED lamp, or a camera, microphone, loudspeaker.

9. The device according to claim 1, **characterized in that** the small electrical load (16) is an apparatus for controlling communication technology based on light, radio and acoustics.

10. The device according to claim 1, **characterized in that** the small electrical load (16) is an apparatus for controlling light LAN, W-LAN, Power-Line, ultrasound, Bluetooth.

## Revendications

1. Dispositif pour l'alimentation continue en énergie d'un petit consommateur ou d'un microconsommateur (16), dans un circuit en courant alternatif électrique (12) existant, auquel un interrupteur (14, 14a) avec une diode (11, 11a) est attribué et par lequel le petit consommateur ou le microconsommateur (16) peut être alimenté de façon durable en courant électrique du circuit en courant alternatif électrique (12) par le circuit en courant alternatif électrique (12) par l'interrupteur (14, 14a) avec la diode (11, 11a) avec une tension demi-onde, indépendamment du fait de savoir si l'interrupteur (14, 14a) ferme ou ouvre le circuit en courant alternatif électrique (12), **caractérisé en ce que** la diode (11, 11a) est montée pour shunter l'interrupteur (14, 14a) soit dans le sens du courant du circuit en courant alternatif électrique (12), soit dans le sens inverse, et **en ce que**, pour l'excitation du petit consommateur ou du microconsommateur (16), un circuit électrique (15, 15a), lequel est formé comme unité d'alimentation de secours (SPU) et comprend au moins une détection de demi-onde (27), un convertisseur CA/CC (29) et un relais/interrupteur électrique (32), est attribué au circuit en courant alternatif électrique (12), de telle sorte que, en fonction du type de montage de la diode dans l'interrupteur (14, 14a), l'électronique du circuit électrique (15, 15a) détecte des demi-ondes positives ou négatives dès que l'interrupteur (14, 14a) est ouvert, le circuit électrique (15, 15a) commandant le petit consommateur ou le microconsommateur (16) et un microprocesseur étant attribué au circuit électrique (15, 15a), par lequel le petit consommateur électrique ou le microconsommateur électrique (16) peut être excité par une interface d'entrée sous la forme d'une interface Web (interface utilisateur Web) ou d'une application d'utilisateur pour PC et/ou d'un téléphone portable, par le fait que le microprocesseur détecte l'actionnement de l'interrupteur (14, 14a) par l'application d'une tension alternative normale ou d'une demi-onde positive ou négative du circuit en courant alternatif électrique (12) et reçoit par cela des informations sur l'état de commutation de l'interrupteur (14, 14a), ces informations sur l'état de commutation de l'interrupteur (14, 14a) par le microprocesseur pouvant être utilisées pour l'excitation de l'interface d'entrée dans l'interface Web ou dans l'application.

2. Dispositif selon la revendication 1 précédente, **caractérisé en ce que** deux circuits électriques (15, 15a) sont disposés dans un circuit en série avec deux bascules (21), deux diodes (11, 11a) étant disposées dans un sens quelconque pour l'alimentation continue en électricité des circuits électriques (15, 15a) de telle sorte qu'elles shuntent l'interrupteur (14, 14a).

3. Dispositif selon la revendication 1 et 2, **caractérisé en ce que** la diode (11, 11a) est remplacée par une LED.

4. Dispositif selon la revendication 1 ou 2, **caractérisé en ce qu'**une détection de la demi-onde appliquée est effectuée par la diode (11, 11a) installée dans le circuit en courant alternatif électrique (12), par l'électronique du circuit électrique (15, 15a), des demi-ondes positives, négatives ou les deux étant appliquées à l'électronique du circuit électrique (15, 15a), en fonction du mode de réalisation du circuit et du type de raccordement de la diode (11, 11a) et de l'état de commutation de l'interrupteur (14, 14a) dans le circuit (12), et des informations sur les états de commutation ou sur les changements de commutation pouvant être générées par le passage d'une tension alternative pour laquelle les deux demi-ondes sont appliquées au circuit électrique (15, 15a) à une demi-onde positive ou négative, laquelle est appliquée au circuit électrique (15, 15a), de telle sorte qu'une modification de l'état de commutation dans le circuit électrique (12) peut être déduite de ces informations.

5. Dispositif selon la revendication 4, **caractérisé en ce que**, en fonction de la tension appliquée détectée, une LED de faible charge, lorsque uniquement une alimentation en tension demi-onde est appliquée, ou une LED de grande charge, lorsque les deux tensions demi-ondes sont appliquées, sont excitées par le circuit électrique (15, 15a), la mise sous tension du consommateur de charge (16, 16a) étant effectuée soit automatiquement, soit par des signaux de commande externes, par la détection de l'état de commutation de l'interrupteur (14, 14a).

6. Dispositif selon la revendication 5, **caractérisé en ce que** la détection de la tension appliquée au circuit électrique (15, 15a) est effectuée par une détection de demi-onde (27), laquelle est connectée à un convertisseur CA/CA, et l'excitation du consommateur de charge (16, 16a) est effectuée par un relais tout ou rien intégré (32) ou par un interrupteur électrique (14, 14a), lequel est connecté au convertisseur CA/CA.

7. Dispositif selon la revendication 5, **caractérisé en ce qu'**une isolation galvanique (30) est attribuée au circuit électrique (15, 15a), par laquelle la tension de réseau du circuit en courant alternatif électrique (12) peut être découplée, **en ce qu'**une mise à disposition de la tension requise par le consommateur de charge (16, 16a) est effectuée après l'isolation galvanique de la tension de réseau, par un convertisseur CA/CC (29).

8. Dispositif selon la revendication 1, **caractérisé en ce que** le petit consommateur électrique (16) est un capteur, pour une surveillance de locaux, une détection de fumée, une détection d'incendie ou une détection de mouvement, ou est une lampe, par exemple une lampe LED, ou est une caméra, un microphone, un haut-parleur.

9. Dispositif selon la revendication 1, **caractérisé en ce que** le petit consommateur électrique (16) est un appareil pour la commande de technique de communication basée sur la lumière, les ondes radio et les sons.

10. Dispositif selon la revendication 1, **caractérisé en ce que** le petit consommateur électrique (16) est un appareil pour la commande de : Li-Fi, Wi-Fi, courants porteurs en ligne, ultrasons, Bluetooth.
